(19) Europäisches Patentamt
European Patent Office
Office européen des brevets

(11) **EP 2 507 164 B1**

(12) **EUROPÄISCHE PATENTSCHRIFT**

(45) Veröffentlichungstag und Bekanntmachung des Hinweises auf die Patenterteilung:
**18.10.2017 Patentblatt 2017/42**

(21) Anmeldenummer: **10771111.1**

(22) Anmeldetag: **28.10.2010**

(51) Int Cl.:
*C01B 17/54* [(2006.01)]    *C01B 17/76* [(2006.01)]
*C01B 17/74* [(2006.01)]    *C01B 17/50* [(2006.01)]

(86) Internationale Anmeldenummer:
**PCT/EP2010/066303**

(87) Internationale Veröffentlichungsnummer:
**WO 2011/067042 (09.06.2011 Gazette 2011/23)**

(54) **VERFAHREN ZUR HERSTELLUNG VON SCHWEFELSÄURE**

Method for making sulphuric acid

Procédé de fabrication d'acide sulfurique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.12.2009 EP 09014862**
           **09.09.2010 DE 102010040482**

(43) Veröffentlichungstag der Anmeldung:
**10.10.2012 Patentblatt 2012/41**

(73) Patentinhaber: **Chemetics, Inc.**
**Vancouver, British Columbia, V5M 0AS (CA)**

(72) Erfinder:
• **ERKES, Bernd**
**41379 Brüggen (DE)**
• **KÜRTEN, Martin**
**51465 Bergisch Gladbach (DE)**
• **WEBER, Torsten**
**42799 Leichlingen (DE)**
• **FÖRTSCH, Dieter**
**42799 Leichlingen (DE)**

(74) Vertreter: **Beyer, Andreas**
**Wuesthoff & Wuesthoff**
**Patentanwälte PartG mbB**
**Schweigerstrasse 2**
**81541 München (DE)**

(56) Entgegenhaltungen:
EP-A2- 1 295 849      WO-A1-2008/052649
WO-A2-2007/090671    DE-B- 1 032 722
DE-B1- 2 501 419      US-A- 3 803 297
US-A- 3 803 298

**Beschreibung**

Die vorliegende Erfindung betrifft das Gebiet der Schwefelsäureherstellung. Gegenstand der vorliegenden Erfindung ist ein Verfahren zur kontinuierlichen Herstellung von Schwefelsäure durch eine mehrstufige Umsetzung von Schwefel mit Sauerstoff.

Schwefelsäure ist einer der bedeutendsten chemischen Grundstoffe und war bis vor einigen Jahren vielfach ein Gradmesser für die wirtschaftliche Entwicklung eines Landes (Sulfuric Acid and Sulfur Trioxide, H. Müller, in Ullmanns Encycl. of Industrial Chemistry, VCH, Weinheim, 2005).

Verwendung findet Schwefelsäure beispielsweise in der Herstellung von Düngemitteln, in der Petrochemie, der Raffinerietechnik, der Chemie, der Farbstoffherstellung, im Bereich des Erzaufschlusses und in der Metallurgie.

In Lehrbüchern der Chemie -wird die Herstellung von Schwefelsäure im industriellen Maßstab als ein dreistufiges Verfahren beschrieben. Im ersten Schritt wird Schwefeldioxid erzeugt, das im zweiten Schritt zu Schwefeltrioxid oxidiert wird. Schwefeltrioxid bildet bei Einleiten in Wasser Schwefelsäure. Da die Reaktion zwischen Schwefeltrioxid und Wasser vergleichsweise langsam abläuft, wird Schwefeltrioxid üblicherweise im dritten Schritt des dreistufigen Verfahrens in Schwefelsäure geleitet.

Die Bildung von Schwefeldioxid erfolgt im industriellen Maßstab üblicherweise entweder durch Verbrennung von elementarem Schwefel oder durch Rösten von Sulfiden, die bei der Verhüttung von Erzen der Nichteisenmetalle (vor allem Kupfer, Zink und Blei) anfallen.

Um eine vollständige Verbrennung von Schwefel zu Schwefeldioxid ($SO_2$) zu gewährleisten, erfolgt die Verbrennung üblicherweise im stöchiometrischen Sauerstoffüberschuss. Diese überstöchiometrische Verbrennung ist beispielsweise in Ullmann's Encyclopedia of Industrial Chemistry, 5. Aufl., 1994, Vol. A25, S. 574 f. beschrieben. Die Verbrennung erfolgt dort in einem horizontal angeordneten zylindrischen Ofen, der feuerfest ausgemauert ist und ein an seiner Stirnseite zentral angeordnetes Brennersystem aufweist. Der flüssige Schwefel wird zerstäubt und mit der Verbrennungsluft vermischt. Die Brennkammern sind adiabat ausgeführt, d.h. eine Wärmeabfuhr aus der Brennkammer erfolgt nicht.

Die Verbrennung von Schwefel zu Schwefeldioxid sollte mit einem hohen Anteil an Sauerstoff im Verbrennungsgas, vorzugsweise mit reinem Sauerstoff erfolgen. Die Verbrennung in Luft, wie sie beispielsweise in EP0762990B1 beschrieben ist, hat den Nachteil, dass aufgrund des hohen Anteils an Stickstoff in der Luft große Apparateabmessungen und hohe Leistungen der Gebläse erforderlich. Daneben besteht die Gefahr der Bildung von so genannten thermischen Stickoxiden $NO_x$.

Allgemein gilt, dass die adiabate Flammentemperatur mit zunehmenden Konzentrationen von Schwefel und Sauerstoff in der Gasphase ansteigt. Bei Verbrennungstemperaturen oberhalb von 1100 °C nimmt die Bildung von so genannten thermischen Stickoxiden ($NO_x$) stark zu. Um die Bildung von thermischen Stickoxiden zu vermeiden, wird in WO2007/090671A2 eine zweistufige Verbrennung vorgeschlagen. Der Schwefel wird dabei komplett an der Stirnseite der Brennkammer zugegeben. Die Zugabe der Verbrennungsluft wird in zwei Stufen aufgeteilt. In der ersten Stufe erfolgt eine unterstöchiometrische Verbrennung des Schwefels. Die reduzierenden Bedingungen verhindern die Bildung von $NO_x$. In der unmittelbar auf die erste Stufe folgenden zweiten Stufe wird durch weitere Luftzugabe die verbleibende Menge an Schwefel im Sauerstoffüberschuss nachverbrannt.

In DE1948754A1 wird ebenfalls eine zweistufige Verbrennung vorgeschlagen, bei der die erste Stufe unterstöchiometrisch, die zweite Stufe überstöchiometrisch in Bezug auf Sauerstoff verläuft. Die Verbrennung erfolgt in den Stufen 1 und 2 adiabat. Zwischen den Stufen erfolgt eine Kühlung der Gasmischung mittels eines Wärmetauschers.

Üblicherweise ist die adiabate Brennkammer über eine Öffnung mit einem Abhitzekessel verbunden. Erst in dem Abhitzekessel wird das Reaktionsgas abgekühlt, vorzugsweise unter Dampfgewinnung (siehe z.B. WO2007/090671A2).

Die Auslegungskriterien herkömmlicher adiabater Brennkammern zur Verbrennung von Schwefel basieren auf der Flammenlänge und dem Durchmesser der Flamme. Die Dimensionierung der Brennkammer erfolgt so, dass ein vollständiger Ausbrand des Schwefels zu $SO_2$ erfolgt, so dass kein unreagierter Schwefel die Brennkammer verlässt und in die nachgeschaltete Rauchgasabkühlung eintreten kann (WO2007/090671A2).

Der Ausbrand wird herkömmlich durch entsprechend lange Verweilzeiten bei ausreichend hoher Temperatur in der adiabaten Brennkammer sichergestellt. Diese Forderung bestimmt die Größe der Brennkammer und das Temperaturprofil (das bei adiabaten Brennkammern nahezu konstant ist). Zur Begründung der Forderung nach einem vollständigen Ausbrand wird in der Regel angeführt, dass sonst Schäden im Bereich des Kessels zu befürchten sind (siehe z.B. WO1995/32149A1).

In EP1295849B1 ist ein Verfahren zur Niedertemperatur-Verbrennung von Schwefel in Luft beschrieben, bei dem eine Vielzahl von speziellen Maßnahmen getroffen wird, um sowohl bereits im Edukt enthaltende Mengen an $NO_x$ zu eliminieren als auch die durch Verbrennung in Luft entstehenden Mengen an thermischem $NO_x$ zu vermeiden. Die komplette Verbrennungsluft wird am Boden einer Brennkammer zugegeben und der Schwefel in mehreren, vorzugsweise zwei Stufen senkrecht zur Strömungsrichtung der Verbrennungsluft zugeführt. Die Verbrennungstemperatur wird in einem Bereich zwischen 500°C bis 700°C gehalten. Schwefel wird über mehrere peripher am Umfang der Brennkammer verteilte spezielle, pulsierende Fächerdüsen senkrecht zur Strömung der turbulenzarmen, mit gleicher Geschwindigkeit zuströmenden Verbrennungsluft, zerstäubt. Zwischen den Verbrennungszonen erfolgt eine Wärmeauskopplung. Es ist ausschließlich eine Verbrennung mit Luft beschrieben.

Die Reaktion $SO_2 + \frac{1}{2} O_2 \leftrightarrows SO_3$ ist eine Gleichgewichtsreaktion, die nur bei niedrigen Temperaturen auf der Seite des gewünschten Schwefeltrioxids liegt. Bei niedrigen Temperaturen ist die Reaktionsgeschwindigkeit jedoch vergleichsweise gering, so dass eine direkte Oxidation von Schwefeldioxid nicht wirtschaftlich ist. Die Oxidation von Schwefeldioxid zu Schwefeltrioxid erfolgt im industriellen Maßstab daher durch beispielsweise ein katalysiertes Verfahren (Kontaktverfahren) oder ein Nitroseverfahren.

Die unterschiedlichen Modifikationen der Kontaktverfahren, bei denen ein schwefeldioxidhaltiges Gasgemisch vorzugsweise mit Luft in Gegenwart eines Katalysators zu Schwefeltrioxid oxidiert und nachfolgend zu Schwefelsäure umgesetzt wird, haben dabei eine dominierende Bedeutung erlangt.

Im so genannten Doppelkontaktverfahren erfolgt nach einer ersten Umsetzung von Schwefeldioxid und Sauerstoff in einer ersten Kontaktstufe eine Zwischenabsorption des gewonnenen Schwefeltrioxids, bevor das verbleibende Restgas nochmals über eine Kontaktschicht geleitet wird (siehe z.B. Auslegeschrift DE1181181B1). Hierdurch erreicht man höhere Umsätze des Schwefeldioxids. Ziel ist es, den Restgehalt an Schwefeldioxid im Abgas auf eine den gesetzlichen Anforderungen zum Emissionsschutz entsprechende Menge zu reduzieren. Der Aufwand, der hierzu notwendig ist, kann auf Kosten der Wirtschaftlichkeit des Gesamtverfahrens gehen.

Die direkte Umsetzung von Schwefel zu Schwefelsäure in einem Verbrennungsgas mit einem hohen Anteil an Sauerstoff in einem kontinuierlichen Prozess unter wirtschaftlichen Bedingungen und unter Einhalt von Emissions- und Sicherheitsbestimmungen ist technisch schwierig.

Dies liegt unter anderem daran, dass die ersten beiden Verfahrensstufen - Herstellung von Schwefeldioxid und Oxidation des Schwefeldioxids zu Schwefeltrioxid - sinnvoll aufeinander abgestimmt werden müssen, um ein wirtschaftliches Gesamtverfahren zu realisieren. Die bei der Abstimmung auftretenden Probleme seien hier kurz skizziert.

Die Oxidation $SO_2 + \frac{1}{2} O_2 \rightarrow SO_3$ erfolgt wie beschrieben üblicherweise katalytisch z.B. an einem handelsüblichen Vanadiumpentoxid-Katalysator mit oder ohne Cäsium in einem Temperaturfenster von T = 380°C - 650 °C. Es ist bekannt, dass bei T < 380°C der Katalysator nicht die erforderliche Zündtemperatur erreicht. Um sicherzugehen, dass der Katalysator in einem adiabat geführten Prozess anspringt und autotherm betrieben werden kann, muss die Gaseintrittstemperatur daher T>380°C und der $SO_2$-Gehalt bei > ca. 4 Vol. % liegen.

Weiterhin ist bekannt, dass der Katalysator bei T > 630°C irreversibel geschädigt wird. Da die Oxidation von Schwefeldioxid mit Sauerstoff zu Schwefeltrioxid exotherm verläuft, wird die Konzentration an Schwefeldioxid und/oder Sauerstoff im Reaktionsgemisch meist niedrig gehalten, um eine irreversible Schädigung des Katalysators zu vermeiden (siehe z.B. DE10249782A1).

In WO2008/052649A1 ist ein katalytisches Verfahren und eine Vorrichtung zur Oxidation von Schwefeldioxid beschrieben, in denen höhere Konzentrationen von Schwefeldioxid von bis zu 66 Vol.-% eingesetzt werden können. Dies wird durch die Verwendung eines so genannten Röhrenkontaktapparats erreicht. Ein Röhrenkontaktapparat ist ein stehender Wärmetauscher aus mehreren Doppelmantelrohren, die jeweils ein Innenrohr und ein Außenrohr aufweisen, wobei ein Katalysator in das Innenrohr eingefüllt ist und die Wärmeübertragung um dieses Innenrohr/Reaktionsrohr durch ein vorzugsweise im Gleichstrom geführtes Kühlmedium im Zwischenraum aus Innen- und Außenrohr erfolgt. Durch die intensive Wärmeabfuhr kann eine ungewünschte Temperaturerhöhung in den Bereich der Katalysatorschädigung auch bei hohen Schwefeldioxidkonzentrationen wirksam verhindert werden. Sollen Gasgemische mit einem Anteil von 30 bis 66 Vol. % Schwefeldioxid im Röhrenkontaktapparat verarbeitet werden, so wird abhängig von der Gaszusammensetzung am Eingang dem Eingangsstrom Luft- und/oder technischer Sauerstoff beigegeben. Dabei beträgt üblicherweise das Volumenverhältnis von $O_2$ zu $SO_2$ im Kontaktgas 0,5 bis 1,2, vorzugsweise 0,7 bis 0,9.

Die Verbrennung der Schwefelverbindung zu Schwefeldioxid in der ersten Verfahrensstufe sollte also gemäß Stand der Technik so erfolgen, dass das erhaltene Gasgemisch eine Konzentration im Bereich von mehr als 4 Vol.-% und weniger als 66 Vol.-% aufweist, um einer Kontaktanlage zur Oxidation mit vorzugsweise reinem Sauerstoff zugeführt werden zu können.

Die Verbrennung einer Schwefelverbindung wie beispielsweise elementarer Schwefel ist ebenfalls exotherm. Um zu vermeiden, dass die bei der Reaktion frei werdende Wärme die Anlage oder Anlagenteile beschädigt (z.B. durch Eisensulfidbildung) ist eine Temperaturbegrenzung erforderlich. Dazu wird in der Offenlegung DE10351808A1 vorgeschlagen, einen Teil des entstehenden $SO_2$ zur Verdünnung des Reaktionsgemisches zurückzuführen. Bei dem aus diesem Vorschlag resultierenden Verfahren werden ca. 80%-Gew. des aus der Brennkammer austretenden $SO_2$ als Kreisgas gefahren. Durch den hohen Anteil des Kreislaufgases sind hohe Leistungen der Gebläse und große Apparateabmessungen bzw. Rohrleitungsquerschnitte erforderlich, was zu einem unwirtschaftlichen Verfahren führen würde.

Würde das in DE10351808A1 vorgeschlagene Verfahren einer Kontaktanlage vorgeschaltet werden, so könnte nur ein kleiner Anteil (ca. 20%) des im ersten Schritt produzierten $SO_2$ ausgeschleust und einem nach dem Stand der Technik bekannten Kontaktverfahren zugeführt werden. Dieser kleine Anteil müsste zudem noch verdünnt werden, um den geforderten maximalen Volumenanteil an $SO_2$ nicht zu übersteigen.

In US 3,803,297 ist ein Verfahren zur Herstellung von Schwefeltrioxid und Schwefelsäure beschrieben, bei dem Schwefel mit technischem Sauerstoff in einer Mehrzahl von aufeinander folgenden Verbrennungsstufen zu $SO_2$ verbrannt wird. Anschließend erfolgt die katalytische Umsetzung zu $SO_3$ in einer Mehrzahl von aufeinander folgenden Kontaktstufen. In den einzelnen Verbrennungsstufen erfolgt die Verbrennung adiabat. Zwischen den Verbrennungsstufen erfolgt eine Kühlung. In der ersten Verbrennungsstufe werden 5% bis 40% der Gesamtmenge des zu oxidierenden Schwefels mit der halben bis ganzen molaren Menge an zurückgeführtem Schwefeltrioxid vermischt. Der Zusatz von Schwefeltrioxid bewirkt eine Kühlung bei der Verbrennung. Die hohen Verbrennungstemperaturen bei der Verbrennung von Schwefel bewirken eine Zersetzung von Schwefeltrioxid zu Schwefeldioxid und Sauerstoff unter Wärmeaufnahme. Die Rückführung bereits gewonnenen Schwefeltrioxids ist jedoch unter wirtschaftlichen Gesichtspunkten ineffizient. Weiterhin ist die adiabat geführte Verbrennung ungünstig, da die Temperatur in den Verbrennungsstufen nur über die Gaszusammensetzung geregelt werden kann. Da es das Ziel ist, die Edukte in hohen Konzentrationen zu verbrennen, ist eine entsprechend hohe Zahl an Zwischenkühlungen zwischen den Verbrennungsstufen notwendig, um die Temperaturen auf einen geforderten Maximalwert von 2000° zu begrenzen.

US 3803298 A betrifft ein Verfahren und eine Vorrichtung zur kontinuierlichen Herstellung von Schwefeltrioxid hoher Reinheit durch Verbrennung von Schwefel mit Sauerstoff in mehreren Stufen, wobei 5 bis 40 Molprozent des insgesamt zu verbrennenden Schwefels in einer ersten Stufe unter Zumischung etwa der einfachen bis doppelten molaren Menge rückgeführten Schwefeltrioxids mit Temperaturen von etwa 50 °C bis 100 °C ohne äußere Kühlung mit maximal der zur stöchiometrisch vollständigen Verbrennung notwendigen Sauerstoffmenge verbrannt werden.

In DE 1032722 B ist ein Verfahren zur Herstellung schwefeldioxidhaltiger Gase durch gleichzeitige Verbrennung von Schwefel und Schwefelwasserstoff beschrieben, wobei flüssiger Schfel, Schwefelwasserstoff und sauerstoffhaltige Gase gleichzeitig in einem gemeinsamen Verbrennungsraum eingedüst werden und je ein Brenner für Schwefel und Schwefelwasserstoff oder auch mehrere verwendet werden.

Daraus wird deutlich, dass es ein nicht triviales technisches Problem ist, die Verbrennung von Schwefel in einem Verbrennungsgas mit einem hohen Anteil an Sauerstoff zu Schwefeldioxid und die Weiteroxidation zu Schwefeltrioxid in einem einzigen, kontinuierlichen und unter wirtschaftlichen Gesichtspunkten betreibbaren Gesamtverfahren, das ferner die gesetzlich geforderten Emissionsgrenzen einhält, zu integrieren.

Dabei hätte die Integration aller Verfahrensstufen in einem einzigen kontinuierlichen Prozess Vorteile. Wenn es gelänge, die Verfahrensstufen technisch und wirtschaftlich sinnvoll aufeinander abzustimmen, könnte Schwefelsäure bei einer im Vergleich zum Stand der Technik deutlich geringeren Kreislaufführung und damit in einer vergleichsweise kompakten Anlage ohne Zwischenlagerung von Zwischenprodukten ($SO_2$) besonders kostengünstig und nahezu emissionsfrei produziert werden.

Ausgehend vom beschriebenen Stand der Technik stellt sich daher die Aufgabe, ein kontinuierliches Verfahren und eine Vorrichtung zur Herstellung von Schwefelsäure ausgehend von Schwefel bereitzustellen. Im Verfahren soll als Oxidationsmittel ein Verbrennungsgas eingesetzt werden, das vorzugsweise einen höheren Anteil an Sauerstoff aufweist als Luft, um zum einen schädliche Emissionen, die beispielsweise bei der Verwendung von Luft als Oxidationsmittel auftreten würden, gar nicht erst entstehen zu lassen. Zum anderen hätte ein Verbrennungsgas mit einem höheren Anteil an Sauerstoff als Luft den Vorteil, dass die Apparatedimensionen reduziert werden können und geringere Gebläseleistungen erforderlich sind. In dem gesuchten Verfahren und der gesuchten Vorrichtung soll die Verbrennung von Schwefel so erfolgen, dass das produzierte Schwefeldioxid direkt, das heißt ohne Reinigung, Verdünnung und/oder Aufkonzentration der nächsten Verfahrensstufe, der Umsetzung zu Schwefeltrioxid, zugeführt werden kann. Das Verfahren soll im industriellen Maßstab unter wirtschaftlichen Bedingungen zu betreiben sein.

Erfindungsgemäß wird diese Aufgabe durch ein Verfahren gemäß dem unabhängigen Anspruch 1 gelöst. Bevorzugte Ausführungsformen finden sich in den abhängigen Ansprüchen.

Ein erster Gegenstand der vorliegenden Erfindung ist damit ein kontinuierliches Verfahren zur Herstellung von Schwefelsäure, umfassend die Schritte:

(a) Umsetzen von Schwefel mit einem sauerstoffhaltigen Verbrennungsgas in einem Verbrennungsapparat unter Bildung von Schwefeldioxid,
(b) katalytische Oxidation des Schwefeldioxids aus Schritt (a) unter Bildung von Schwefeltrioxid,
(c) Absorption und/oder Kondensation des Schwefeltrioxids aus Schritt (b) in Schwefelsäure,

dadurch gekennzeichnet, dass in Schritt (a) das Verbrennungsgas durch den Verbrennungsapparat geleitet wird, der mindestens zwei in Strömungsrichtung des Verbrennungsgases aufeinander folgende Verbrennungszonen aufweist, wobei in jeder Verbrennungszone Schwefel in das Verbrennungsgas eingedüst wird, wobei jede Verbrennungszone gekühlt wird und wobei jeder Verbrennungszone ein Wärmeübertrager nachgeschaltet ist, mit dem das Reaktionsgas gekühlt wird, so dass die Maximaltemperatur in jeder Verbrennungszone einen Wert von 2000°C nicht übersteigt.

Eine bevorzugte Vorrichtung zur Durchführung des erfindungsgemäßen Verfahrens umfasst mindestens einen Verbrennungsapparat zur Verbrennung von Schwefel, einen Röhrenkontaktapparat zur katalytischen Oxidation von Schwefeldioxid zu Schwefeltrioxid, Mittel zur Absorption und/oder Kondensation von Schwefeltrioxid, Mittel zur Abgasreinigung und Mittel zur Rückführung nicht umgesetzter Mengen an Sauerstoff und Schwefeldioxid aus der katalytischen Oxidation von Schwefeldioxid zu Schwefeltrioxid in den Verbrennungsapparat. Der Verbrennungsapparat weist mindestens einen Einlass für ein Verbrennungsgas und mindestens einen Auslass für das gewonnene Reaktionsgas auf. Zwischen dem Einlass und dem Auslass befinden sich mindestens zwei aufeinander folgende nicht-adiabate Verbrennungszonen. Jede Verbrennungszone ist durch eine oder mehrere Eindüsungsstellen gekennzeichnet, über die Schwefel in die Verbrennungszonen eingedüst wird.

Unter Schwefelsäure wird nachstehend jedes Gemisch oder jede Verbindung aus $SO_3$ und Wasser verstanden. Der Begriff Schwefelsäure umfasst somit beispielsweise die Begriffe konzentrierte Schwefelsäure, hochkonzentrierte Schwefelsäure, Oleum oder Dischwefelsäure.

Das erfindungsgemäße Verfahren ist nicht auf die Verwendung von (elementarem) Schwefel als Ausgangsstoff beschränkt. Als Ausgangsstoff lassen sich Schwefelverbindungen einsetzen, die mit Sauerstoff unter Bildung von Schwefeldioxid reagieren. Beispiele für solche Schwefelverbindungen sind neben elementarem Schwefel beispielsweise Schwefelwasserstoff, Kohlenstoffdisulfid ($CS_2$) und Kohlenoxisulfid (COS). Vorzugsweise wird als Ausgangsstoff eine Schwefelverbindung mit einem hohen Anteil an elementarem Schwefel eingesetzt. Die Verbrennung von elementarem Schwefel hat den Vorteil, dass neben dem gewünschten Schwefeldioxid keine weiteren Produkte auftreten. Daher wird vorzugsweise eine Substanz oder ein Substanzgemisch mit einem hohen Anteil von mindestens 90 Gew.-%, besonders bevorzugt von mindestens 95 Gew.-%, ganz besonders bevorzugt von mindestens 98 Gew.-% an elementaren Schwefel eingesetzt. Der Einfachheit halber erfolgt die Beschreibung der Erfindung auf Basis von Schwefel als Ausgangsstoff, wobei dem Fachmann klar ist, dass der Ausgangsstoff auch eine andere, mit Sauerstoff zu Schwefeldioxid umsetzbare Verbindung sein kann.

Elementarer Schwefel kann in Abhängigkeit der Umgebungsbedingungen wie Druck und Temperatur in verschiedenen Aggregatzuständen (fest, flüssig, gasförmig) und/oder Modifikationen vorliegen (bspw. orthorhombischer oder monokliner Schwefel). Wenn hier von Schwefel oder elementarem Schwefel die Rede ist, wird nicht zwischen derartigen Modifikationen unterschieden; vielmehr fallen alle denkbaren Aggregatzustände, Modifikationen und Gemische hiervon unter die hier verwendeten Begriffe.

Ferner sollen die hier verwendeten Begriffe wie z.B. Sauerstoff, Schwefelverbindung und Schwefel nicht so verstanden werden, dass diese Stoffe in reinem Zustand vorliegen. Wie dem Fachmann bekannt ist, weisen Stoffe je nach Herkunft und Herstellverfahren eine kleinere oder größere Menge an Verunreinigungen auf.

Ein kontinuierliches Verfahren im Sinne dieser Erfindung ist ein Verfahren, bei dem die Zugabe der Edukte in einen Reaktor und der Austrag der Produkte aus dem Reaktor gleichzeitig aber räumlich getrennt stattfinden, während bei einem diskontinuierlichen Verfahren die Reaktionsfolge Zugabe der Edukte, chemische Umsetzung und Austrag der Produkte zeitlich nacheinander ablaufen. Die kontinuierliche Verfahrensweise ist von wirtschaftlichem Vorteil, da Stillstandszeiten des Reaktors infolge von Befüllungs- und Entleerungsprozessen und lange Reaktionszeiten z.B. infolge sicherheitstechnischer Vorgaben oder infolge von Aufheiz- und Abkühlungsprozessen, wie sie bei Batch-Verfahren auftreten, vermieden werden.

Die Umsetzung von Schwefel in Schritt (a) erfolgt in einem Verbrennungsgas, das einen möglichst hohen Gehalt an Sauerstoff und einen möglichst geringen Gehalt an nicht für die Schwefelsäureherstellung nutzbaren Bestandteilen wie beispielsweise Stickstoff, Kohlendioxid, Wasser und/oder Edelgasen enthält, um schädliche Emissionen, große Apparatedimensionen und hohe Gebläseleistungen zu vermeiden.

Als Verbrennungsgas wird erfindungsgemäß ein Gas eingesetzt, das mindestens einen Sauerstoffgehalt wie Luft aufweist, vorzugsweise jedoch einen höheren Anteil an Sauerstoff aufweist als Luft. Vorzugsweise beträgt der Anteil an Sauerstoff mindestens 30%, bevorzugt mindestens 50%, besonders bevorzugt mindestens 70%, ganz besonders bevorzugt mindestens 90%, am meisten bevorzugt mindestens 95%. Übliche weitere Bestandteile sind $CO_2$, Edelgase, Stickstoff und/oder Wasser.

Das Produkt, das bei der Verbrennung der Schwefelverbindung im Verbrennungsgas entsteht, und das im Wesentlichen $SO_2$ und nicht umgesetzte Mengen an Sauerstoff enthält, wird hier als Reaktionsgas bezeichnet.

Die Verbrennung von Schwefel erfolgt in einem Verbrennungsapparat. Dieser weist mindestens einen Einlass für das Verbrennungsgas und mindestens einen Auslass für das gewonnene Reaktionsgas auf. Zwischen dem Einlass und dem Auslass befinden sich mindestens zwei aufeinander folgende Verbrennungszonen. Das Verbrennungsgas wird durch den Einlass in den Verbrennungsapparat gefördert und durchläuft nacheinander die Verbrennungszonen. In den Verbrennungszonen wird Schwefel (oder eine andere brennbare Schwefelverbindung) in das Verbrennungsgas eingedüst und verbrannt.

Durch die vergleichsweise hohe Konzentration an Oxidationsmittel erfolgt die Verbrennung von Schwefel unter hoher Wärmeentwicklung. Es besteht die Gefahr, dass die Temperaturen im Verbrennungsapparat auf Werte ansteigen, bei denen die Anlage oder Anlagenteile (Innenwandungen, Düsen für die Zugabe der Reaktionskomponenten etc.) beschädigt werden.

Dennoch ist es nicht notwendig, große Mengen an Schwefeldioxid zur Kühlung und/oder Verdünnung in den Verbrennungsapparat zurückzuführen, wie es beispielsweise in DE10351808A1 beschrieben ist. Ebenso ist es nicht notwendig, Schwefeltrioxid in den Verbrennungsapparat zurückzuführen, um eine Kühlung zu erreichen, wie es beispielsweise in US 3,803,297 beschrieben ist.

Vielmehr verfügt der Verbrennungsapparat über Mittel zur Kühlung, welche die bei der Verbrennung entstehende Wärme effizient abführen. Im Gegensatz zu den meisten, im Stand der Technik beschriebenen Verbrennungsapparaten ist der hier beschriebene Verbrennungsapparat nicht-adiabat ausgeführt. Damit unterliegt dieser Verbrennungsapparat nicht der Beschränkung, dass die bei der Verbrennung entstehende Wärme ausschließlich über die Gaszusammensetzung geregelt werden kann. Stattdessen es ist möglich, die Wärme dort zu entfernen, wo sie anfällt. Vorzugsweise erfolgt die Kühlung auf zwei verschiedene Arten: eine Wandkühlung und eine so genannte Zwischenkühlung. Bei der Wandkühlung wird die Wand des Verbrennungsapparates gekühlt. Die Wärmeabfuhr aus einer Verbrennungszone erfolgt dabei hauptsächlich durch Strahlung. Zusätzlich wird die Verbrennung auf verschiedene Verbrennungszonen innerhalb des Verbrennungsapparates aufgeteilt. Jeder Verbrennungszone sind ein oder mehrere Wärmeübertrager zur Abführung von Reaktionswärme nachgeschaltet. Hier erfolgt die Wärmeabfuhr hauptsächlich über Konvektion.

Der Begriff Verbrennungszone soll hier nicht so verstanden werden, dass die Verbrennung von Schwefel ausschließlich in einer solchen Zone erfolgt. Vielmehr ist eine Verbrennungszone dadurch definiert, dass hier die Zugabe von Schwefel in das Verbrennungsgas und die Zündung des Schwefels erfolgt. Um die Verbrennungswärme in den Griff zu bekommen und die Temperatur im Verbrennungsapparat auf einen Maximalwert von 2000°C zu begrenzen, erfolgt die Zugabe von Schwefel erfindungsgemäß an verschiedenen Stellen innerhalb des Verbrennungsapparats, zwischen denen das Reaktionsgas gekühlt wird; zusätzlich wird die Wand des Verbrennungsapparats gekühlt. Die Verbrennung kann daher durchaus über das ganze Volumen des Verbrennungsapparates stattfinden, also auch zwischen zwei Verbrennungszonen.

Der Verbrennungsapparat ist vorzugsweise ein wandgekühlter Wasserrohrkessel (Rohr-Steg-RohrKonstruktion). Wasserrohrkessel sind dem Fachmann der chemischen Verfahrenstechnik aus dem Stand der Technik bekannt (siehe z.B. Dubbel interaktiv, Taschenbuch für den Maschinenbau, L.6.1.1.). Die intensive Kühlung der Wandungen sorgt dafür, dass die Wandtemperatur unterhalb der durch Eisensulfidbildung gekennzeichneten Temperatur von etwa 480°C bleibt, auch wenn in den Verbrennungszonen Temperaturen von bis zu 2000°C herrschen. Die Wandtemperatur liegt vorzugsweise im Bereich von 200°C bis 400°C, bevorzugt im Bereich von 240°C bis 350°C.

Vorzugsweise wird die gesamte Menge oder zumindest ein Großteil des Verbrennungsgases, das für die Umsetzung von Schwefel in Schritt (a) und für die Umsetzung von Schwefeldioxid in Schritt (b) des erfindungsgemäßen Verfahrens benötigt wird, durch einen oder mehrere Einlässe an einem Ende des Verbrennungsapparates in diesen gefördert. In allen Verbrennungszonen verläuft die Verbrennung von Schwefel im Sauerstoffüberschuss (überstöchiometrisch in Bezug auf Sauerstoff).
Ein geringerer Teil des Verbrennungsgases kann zur Eindüsung der Schwefelverbindung in die Verbrennungszonen und/oder zur Kühlung der Düsen verwendet werden. Vorzugsweise wird zur Eindüsung der Schwefelverbindung und/oder zur Kühlung der Düsen jedoch ein Gas verwendet, das über einen geringeren Anteil an Sauerstoff verfügt als das Verbrennungsgas. Als so genanntes Eindüsungs- und/oder Düsenkühlungsgas wird vorzugsweise zumindest anteilig rückgeführtes Reaktionsgas enthaltend $SO_2$ verwendet (Details siehe unten).

Es ist denkbar, dem Verbrennungsgas nicht umgesetzte Mengen an Schwefeldioxid und/oder Sauerstoff zuzugeben, d.h. ein Teil des Reaktionsgases im Kreis zu fahren. Vorteile ergeben sich insbesondere durch die bessere Ausnutzung der Edukte.

Bei jeglicher Rückführung ist sowohl die Rückführung eines Teils des Reaktionsgases direkt nach der Schwefelverbrennung (im Anschluss an Schritt (a)) als auch die Rückführung von nicht umgesetzten Mengen $SO_2$ und/oder $O_2$ nach der Absorption und/oder Kondensation von $SO_3$ (im Anschluss an Schritt (c)) denkbar. Rückgeführtes Gas wird hier allgemein als Kreisgas bezeichnet.

In Strömungsrichtung ist die Brennkammer wie oben ausgeführt in mindestens zwei Verbrennungszonen aufgeteilt. Die Anzahl der Verbrennungszonen liegt vorzugsweise im Bereich von 3 bis 8, besonders bevorzugt im Bereich von 3 bis 5. In den Verbrennungszonen befinden sich Eindüsungsstellen für die Zuführung der Schwefelverbindung. Die Zahl der Eindüsungsstellen pro Verbrennungszone liegt bevorzugt im Bereich von 1 bis 8, besonders bevorzugt im Bereich von 2 bis 6, ganz besonders bevorzugt im Bereich von 3 bis 5.

Die Verbrennung ist so ausgelegt, dass Schwefel bei Eintritt in die Verbrennungszonen zündet. Die Zündtemperatur von Schwefel liegt je nach Konzentration an Sauerstoff in der Gasphase und Tropfen-/Partikelgröße der möglichst fein verteilten Schwefelverbindung bei oberhalb von etwa 260°C.

Die Zündstabilität kann durch verschiedene Maßnahmen sichergestellt werden. Es ist beispielsweise denkbar, das Verbrennungsgas auf eine Temperatur oberhalb der Zündtemperatur von Schwefel vorzuwärmen. Es ist denkbar, das Verbrennungsgas mit heißem Kreisgas zu mischen, um eine Temperatur oberhalb der Zündtemperatur zu erreichen. Ebenso ist es denkbar, dass das Verbrennungsgas eine Temperatur unterhalb der Zündtemperatur von Schwefel aufweist, und die Flamme durch eine Rezirkulationszone stabilisiert wird. In der Rezirkulationszone erfolgt eine strömungstechnisch erzwungene Rückströmung. Diese erzwungene Rückströmung kann durch interne Rezirkulationszonen im Falle einer unverdrallten Flamme oder durch interne Rezirkulationszonen im Falle einer verdrallten Flamme realisiert werden.

Schwefel wird üblicherweise mittels handelsüblicher Düsen in flüssiger Form in die Brennkammer eingedüst. Es sind sowohl innen mischende als auch außen mischende Düsen einsetzbar. Als Zerstäubungsmedium wird vorzugsweise ein Gas verwendet, das über einen moderaten Sauerstoffgehalt verfügt. Dies kann beispielsweise Luft oder Kreisgas oder eine Mischung von Verbrennungsgas und Kreisgas sein. Hierdurch wird die lokale Flammentemperatur in der Nähe der Düse verringert und eine Schädigung der Düsenspitze vermieden.

In einer bevorzugten Ausführungsform wird die Düse von außen mit einem Gas gekühlt, das einen geringeren Sauerstoffgehalt als das Verbrennungsgas aufweist, vorzugsweise mit Kreisgas. Dies ermöglicht die Verbrennung in einem Verbrennungsgas mit einer hohen Sauerstofflconzentration ohne Zerstörung der Düsen aufgrund zu hoher Temperaturen. Die lokale Flammentemperatur in der Nähe der Düse wird so weit reduziert, dass eine Schädigung der Düsenspitze nicht erfolgt, d.h. die intensive Wärmefreisetzung wird von der Eindüsung separiert.

Überraschend wurde gefunden, dass ein vollständiger Ausbrand der Schwefelverbindung, wie er im Stand der Technik gefordert wird, nicht nötig ist. Es hat sich gezeigt, dass im Verbrennungsapparat verbleibende Schwefelreste keine negativen Einflüsse ausüben. Damit erfolgt die Dimensionierung des Verbrennungsapparates, insbesondere der einzelnen Verbrennungszonen lediglich so, dass eine Flammenstabilität erreicht wird, und nicht, um einen vollständigen Ausbrand sicherzustellen. Dies führt zu einer Reduzierung der Verweilzeit in den heißen Zonen und damit zu einer verminderten Bildung von thermischem $NO_x$. Darüber hinaus kann der Verbrennungsapparat kompakter gestaltet werden.

Den einzelnen Verbrennungszonen sind Mittel zur Kühlung des Reaktionsgases nachgeschaltet. Erfindungsgemäß verläuft die Verbrennung in mindestens zwei aufeinander folgenden Stufen, zwischen denen ein Teil der Reaktionswärme aus der Brennkammer entfernt wird (intensive Zwischenkühlung). Zur Kühlung werden beispielsweise Wärmetauscher eingesetzt. Die den einzelnen Verbrennungszonen nachgeschalteten Wärmetauscher setzen vorzugsweise flüssiges Wasser und/oder ein zweiphasiges Wasser-Dampfgemisch zur Kühlung ein. Die Reaktionswärme kann beispielsweise zur Erzeugung von Hochdruck-Dampf bei z.B. 30 bar verwendet werden. Wie oben bereits beschrieben, erfolgt zudem eine Kühlung der Verbrennungszonen über die Wand des Verbrennungsapparates.

Durch die Menge des pro Zeiteinheit in den Hauptgasstrom eingedüsten Schwefels und die Ausgestaltung der Kühlmittel (Wandkühlung und Zwischenkühlung) lässt sich die Wärmeentwicklung in jeder Verbrennungszone steuern. Dabei werden die Dosierung von Schwefel in jede Verbrennungszone und die Wärmeabfuhr in und zwischen den Verbrennungszonen so eingestellt, dass die Maximaltemperatur in jeder Verbrennungszone 2000°C nicht übersteigt.

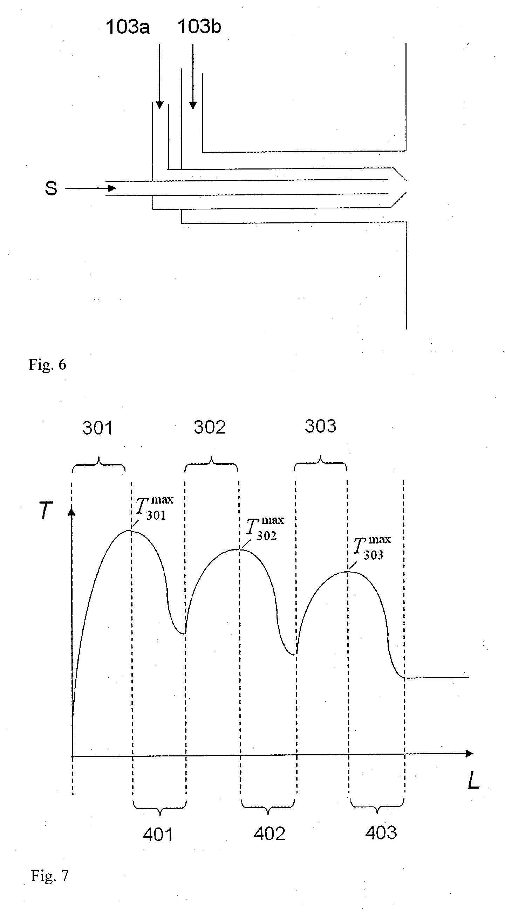

Zudem ist das erfindungsgemäße Verfahren vorzugsweise dadurch gekennzeichnet, dass die Spitzentemperaturen in Strömungsrichtung von Verbrennungszone zu Verbrennungszone geringer werden, d.h. es stellt sich in Strömungsrichtung ein Gradient bzgl. der Maximaltemperatur ein (siehe z.B. Fig. 7). So wird beispielsweise in einer ersten Verbrennungszone, die der Hauptgasstrom als erstes passiert, vorzugsweise der höchste Massenstrom an Schwefel eingestellt, der zu einer höchsten Maximaltemperatur in dem Verbrennungsapparat führt. Diese höchste Maximaltemperatur beträgt 2000°C oder weniger. Die maximale Temperatur in der ersten Verbrennungszone liegt bevorzugt im Bereich von 1200°C bis 2000°C, besonders bevorzugt im Bereich von 1600°C bis 1900°C. In den in Strömungsrichtung des Hauptgasstroms nachfolgenden Verbrennungszonen wird die Maximaltemperatur sukzessive reduziert.

Es ist denkbar, im Anschluss an die letzte Verbrennungszone dem Reaktionsgas eine Schwefelverbindung zuzugeben, um vorhandenes $NO_x$ zu reduzieren. Als Schwefelverbindung kommt beispielsweise Schwefel oder $H_2S$ in Frage; vorzugsweise wird Schwefel verwendet.

Die Temperatur des Reaktionsgases liegt bei Verlassen der letzten Verbrennungszone vorzugsweise im Bereich von 500°C bis 850°C.

Das aus der letzten Verbrennungszone austretende Reaktionsgas, das im Wesentlichen Schwefeldioxid und Sauerstoff enthält, wird auf eine Temperatur von 380°C bis 450°C abgekühlt, bevor es dem Schritt (b) des erfindungsgemäßen Verfahrens zugeführt wird.

In einer besonders bevorzugten Ausführungsform ist der letzten Verbrennungszone ein Wärmetauscher nachgeschaltet, der Heißdampf zur Kühlung einsetzt. Die Temperatur in der letzten Verbrennungszone wird durch den Massenstrom an zudosiertem Schwefel vorzugsweise so eingestellt, dass in dem nachgeschalteten Wärmetauscher überhitzter Heißdampf zum Antreiben einer Turbine erzeugt werden kann.

Überraschend wurde festgestellt, dass die Temperatur des Gasstroms, der dem Schritt (b) des erfindungsgemäßen Verfahrens zugeführt wird, in einem vergleichsweise weiten Bereich variiert werden kann, ohne dass dies einen negativen Einfluss auf den Umsatz des erfindungsgemäßen Verfahrens hat. Daher kann die Verbrennung von Schwefel in der letzten Verbrennungszone so durchgeführt werden, dass sich eine optimierte Energie/Wärme-Bilanz des Verfahrens ergibt.

Die Temperatur des Heißdampfes wird vorzugsweise im Bereich von 400°C bis 450°C gehalten, um die Bildung von Eisensulfid zu vermeiden.

Wie oben bereits erläutert, wird die über den Hauptgasstrom und die Dosierungsströme eingegebene Menge an Sauerstoff vorzugsweise so eingestellt, dass für die nachfolgende katalytische Oxidation von Schwefeldioxid zu Schwefeltrioxid in Schritt (b) kein weiterer Sauerstoff mehr zugeführt werden muss. Die für die Herstellung von Schwefelsäure benötigte Gesamtmenge an Sauerstoff wird demnach bereits vollständig in Schritt (a) des erfindungsgemäßen Verfahrens eingesetzt.

Das den Verbrennungsapparat verlassende Gasgemisch enthält vorzugsweise Schwefeldioxid und Sauerstoff im Volumenverhältnis von 0,5 bis 1,5, bevorzugt von 0,8 bis 0,9.

In Schritt (b) des erfindungsgemäßen Verfahrens wird das in Schritt (a) gewonnene Schwefeldioxid weiter zu Schwefeltrioxid umgesetzt. Das Gasgemisch aus Schritt (a), das dem Schritt (b) zugeführt wird, enthält bereits alle Edukte ($SO_2$, $O_2$) in einem für Schritt (b) sinnvollen Verhältnis. Eine separate Zufuhr von Sauerstoff oder Schwefeldioxid ist nicht erforderlich. Auch eine Verdünnung mit einem inerten Trägergas ist nicht erforderlich. Die Umsetzung zu Schwefeltrioxid erfolgt mittels eines Kontaktverfahrens. Vorzugsweise wird ein Röhrenkontaktapparat, wie er beispielhaft in WO2008/052649A1 beschrieben ist, verwendet. Einem solchen Röhrenkontaktapparat können Kontaktgase mit einem Schwefeldioxidgehalt von bis zu 66 Vol. % zugeführt werden, da der Röhrenkontaktapparat durch eine intensive Wärmeabfuhr gekennzeichnet ist.

Um die Reaktionsrohre des Röhrenkontaktapparats erfolgt mittels eines Kühlmediums, das durch die Außenrohre geführt wird, eine kontinuierliche Wärmeabfuhr. Vorzugsweise erfolgt die Wärmeabfuhr über einen Zwischenkreislauf. Durch den Zwischenkreislauf wird die Wärme von den Reaktionsrohren abgeführt und in einem nachgeschalteten indirekten Wärmeübertrager an ein weiteres Medium zur energetischen Nutzung übertragen. Somit erfolgt beispielsweise eine energetische Nutzung zur Dampferzeugung nicht unmittelbar durch die an den Reaktionsrohren frei werdende Wärme sondern erst durch die vom Zwischenkreislauf übertragene Wärme.

Die Führung des Kühlmediums kann in Kreuz-, Gegen- oder Gleichstrom ausgeführt werden. Aufgrund des exothermen Reaktionsverlaufs ist die vorzugsweise Ausgestaltung die Gleichstromführung. Sie bietet deutliche Vorteile in Bezug auf die sichere Vermeidung von lokalen Temperaturüberschreitungen am Katalysator und bezüglich des Massenstroms des im Kreislauf zu führenden Kühlmediums.

Als Kühlmedium für die indirekte Wärmeabfuhr über den Zwischenkreislauf können grundsätzlich in Betracht gezogen werden: Wärmeträgeröle, Salzschmelzen, Salzlösungen, Dampf, Gase und/oder Luft.

Die aus dem Kühlkreislaufbetrieb im Temperaturniveau von etwa 220 °C bis 550 °C bevorzugt von 300 °C bis 450 °C abzuführende Wärme kann über einen Wärmetauscher bevorzugt als Dampf zur weiteren betrieblichen Verwendung ausgekoppelt werden.

Üblicherweise besteht der Katalysator in den Reaktionsrohren aus einem katalytisch aktiven Metall oder einem Metallderivat, das ggf. mit Promotoren versehen auf einem inerten, temperaturbeständigen Katalysatorträgermaterial aufgetragen ist. Beispielsweise ist der Katalysator $V_2O_5$ mit Kalium- und Natriumsalzen auf $SiO_2$ geträgert. Alternativ kann auch handelsüblicher mit Cäsium dotierter Vanadiumpentoxidkatalysator eingesetzt werden.

Das sich im Schritt (b) des erfindungsgemäßen Verfahrens einstellende Temperaturfenster und insbesondere Temperaturmaximum wird innerhalb festgelegter Grenzen bezüglich der Schwefeldioxidkonzentration im Wesentlichen in der Designphase festgelegt. Wesentliche Parameter für das Design sind Gaseintrittstemperatur, Gasgeschwindigkeit, Katalysatorverdünnung, Rohrgeometrie und Kühlleistung.

Die Bedingungen werden üblicherweise so gewählt, dass der Katalysator beim Einsatz eines Vanadiumpentoxidkatalysators mit oder ohne Cäsium an keiner Stelle den Grenzwert von 640°C überschreitet. Bevorzugt werden die Bedingungen so gewählt, dass sich über die Rohrlänge ein Temperaturprofil einstellt, bei dem die Eintrittstemperatur im Bereich von 380°C bis 450°C, vorzugsweise 400°C bis 450°C und die Austrittstemperatur im Bereich von 430°C bis 500°C liegt, sowie das Temperaturmaximum nicht höher als 580 °C liegt.

Zur Verbesserung des Temperaturprofils über die Schütthöhe des Katalysators kann der Katalysator mit einem temperaturbeständigen Inertmaterial, insbesondere dem reinen Katalysatorträgermaterial vermischt werden, wie z. B. mit Glas, $SiO_2$, $Al_2O_3$ oder sonstigen üblichen Oxiden, Keramik, Silicagel oder Zeolithe, bevorzugt Glas oder Keramik.

Üblicherweise wird der eingesetzte Katalysator in seiner Reaktivität durch Mischen mit dem Inertmaterial im Mengenverhältnis 1:100 bis 100:1 voreingestellt. Bevorzugt werden Inertmaterial und Katalysator in Mengenverhältnissen 90:10 bis 40:60, besonders bevorzugt 80:20 bis 40:60 vermischt.

Es ist denkbar, mehrere Röhrenkontaktapparat in Reihe oder parallel geschaltet zu betreiben.

Vorzugsweise erfolgt Schritt (b) in einer einzigen Kontaktstufe, da hierdurch eine besonders kompakte Anlage realisiert werden kann. Es ist nicht notwendig, in der Kontaktstufe einen maximalen Umsatz zu realisieren (siehe unten).

Das aus dem Kontaktverfahren resultierende Gasgemisch weist ein Massenverhältnis von $SO_2$:$SO_3$ im Bereich von 1:50 bis 1:2, bevorzugt im Bereich von 1:7 bis 1:3 und ganz bevorzugt 1:6 bis 1:4 auf. Das heißt, das aus dem Kontaktverfahren resultierende Gas weist eine merkliche Restmenge an nicht umgesetztem Schwefeldioxid auf. Das Gasgemisch weist ferner Restmengen an Sauerstoff und gegebenenfalls weitere Bestandteile auf. Dieses Gasgemisch wird dem Schritt (c) des erfindungsgemäßen Verfahrens zugeführt.

In Schritt (c) des erfindungsgemäßen Verfahrens wird der aus Schritt (b) resultierende Gasstrom einem Absorber zugeführt, um Schwefeltrioxid vom Restgas, das nicht umgesetzte Mengen an Schwefeldioxid und Sauerstoff umfasst, zu trennen.

Das Restgas kann, ggf. nach einer Reinigung und/oder Abspaltung eines Teilstroms, prinzipiell dem Schritt (b) zugeführt, das heißt in die Kontaktanlage zurückgeführt werden. Vorzugsweise werden die in Schritt (b) nicht umgesetzten Mengen an $SO_2$ und $O_2$ dem Hauptgasstrom in Schritt (a) zugeführt. Auf die Vorteile dieser bevorzugten Ausführungsform des erfindungsgemäßen Verfahrens wird im Folgenden näher eingegangen.

In einer bevorzugten Ausführungsform erfolgt die katalytische Umsetzung von Schwefeldioxid mit Sauerstoff zu Schwefeltrioxid in einer einzigen Kontaktstufe, die vorzugsweise durch einen Röhrenkontaktapparat gebildet wird. Der aus dem Röhrenkontaktapparat austretende Gasstrom weist neben Schwefeltrioxid nicht umgesetzte Mengen an $SO_2$ und $O_2$ auf. Dem aus dem Röhrenkontaktapparat austretenden Gasstrom wird in Schritt (c) Schwefeltrioxid durch Absorption und/oder Kondensation entzogen. Anschließend wird der Gasstrom zumindest anteilig in den Hauptgasstrom des Schritts (a) zurückgeführt. Dies dient zum einen zur Kühlung der Düsenspitzen. Zum anderen werden wertvolle Bestandteile wie Sauerstoff zurückgeführt. Weiterhin können durch die Rückführung von $SO_2$ die gesetzlich geforderten Emissionsgrenzwerte in effizienter Weise eingehalten werden.

Die Verwendung einer einzigen Kontaktstufe, in der zwar der Umsatz von $SO_2$ gegenüber zum Beispiel einem Doppelkontaktverfahren reduziert ist, bringt demnach überraschenderweise durch die Rückführung des nicht umgesetzten $SO_2$ Vorteile beim Gesamtverfahren mit sich. Durch diese bevorzugte Kombination von einer einzigen Kontaktstufe mit Rückführung des nicht umgesetzten $SO_2$ in den Verbrennungsapparat können die genannten Verfahrensstufen

- Verbrennung von Schwefel,
- katalytische Oxidation von Schwefeldioxid

so aufeinander abgestimmt werden, dass ein effizientes, emissionsarmes Gesamtverfahren zur Herstellung von Schwefelsäure resultiert.

Diese Vorgehensweise ist insbesondere deswegen nicht naheliegend, weil es stets das Ziel bei der Verfahrensentwicklung ist, einen hohen Umsatz zu gewährleisten. Daher wäre man geneigt, die Umsätze der einzelnen Stufen zu maximieren, d.h. man wäre geneigt, die katalytische Umsetzung von Schwefeldioxid zum Beispiel mittels eines Doppelkontaktverfahrens zu realisieren, anstatt nur eine einzige Kontaktstufe einzusetzen. Ein optimiertes Gesamtverfahren ergibt sich im vorliegenden Fall jedoch, wenn der Umsatz einzelner Verfahrensstufen (hier der katalytischen Oxidation von Schwefeldioxid) nicht maximiert sondern bewusst kleiner gewählt wird als technisch möglich wäre.

Der Schlüssel zu dem erfindungsgemäßen, optimierten Verfahren zur Herstellung von Schwefelsäure liegt demnach in der Kombination der folgenden Merkmale:

1. Die Verbrennung von Schwefel wird mit einem Verbrennungsgas, das einen möglichst hohen Gehalt an Sauerstoff aufweist, durchgeführt. Dies bewirkt einen geringeren Aufwand bei der Gasverdichtung und ermöglicht kleinere Apparateabmessungen und kleinere Rohrleitungen.

2. Die Reaktion zwischen Sauerstoff und Schwefel wird auf mehrere einzelne Verbrennungszonen verteilt. Zwischen diesen Verbrennungszonen sind Wärmetauscher zur Abfuhr eines Teils der entstehenden Reaktionswärme eingebracht. Zudem werden die Verbrennungszonen über die Wand des Verbrennungsapparats gekühlt. Dadurch ist es möglich, Sauerstoff und Schwefel zu verbrennen, ohne dass notwendigerweise große Mengen an Verdünnungsgasen zur Kühlung eingesetzt werden müssten, um den Temperaturanstieg durch die Wärmeentwicklung kontrollieren zu können. Damit lässt sich ein Gas mit einer hohen Konzentration an $SO_2$ am Ausgang der Verbrennungsanlage realisieren, das direkt einem Kontaktverfahren zur weiteren, katalytischen Oxidation zugeführt werden kann.

3. Die katalytische Oxidation des Schwefeldioxids erfolgt in einem Röhrenkontaktapparat, der über eine besonders intensive und effektive Wärmeabfuhr verfügt, die es erlaubt, mit besonders hohen $SO_2$-Volumenkonzentrationen in die Kontaktstufe zu gehen. Damit ist es auch nicht erforderlich, das aus der Verbrennung stammende Reaktionsgas zu verdünnen.

4. Anstelle eines Doppelkontaktverfahrens erfolgt die katalytische Oxidation in einem Röhrenkontaktapparat in einer einzigen Kontaktstufe, die einen geringeren Umsatz bringt als ein Doppelkontaktverfahren, die aber wesentlich kompakter und besser regelbar ist und weniger Investitionskosten erfordert, und die eine Menge an $SO_2$ im Produktgasstrom belässt, die optimal zur Verdünnung und Kühlung des Verbrennungsgases und/oder zur Düsenkühlung geeignet ist.

5. Die Rückführung der nicht umgesetzten Menge

an $SO_2$ und $O_2$ aus dem Kontaktverfahren in den Verbrennungsapparat schließt den Kreis des optimierten Herstellungsverfahrens für Schwefelsäure.

Vorzugsweise erfolgt eine Wärmerückgewinnung an unterschiedlichen Positionen des Prozesses für das Erzeugen von Dampf, Warmwasser und/oder elektrischer Energie.

Die Erfindung wird nachstehend anhand von Beispielen näher erläutert ohne sie jedoch hierauf zu beschränken.

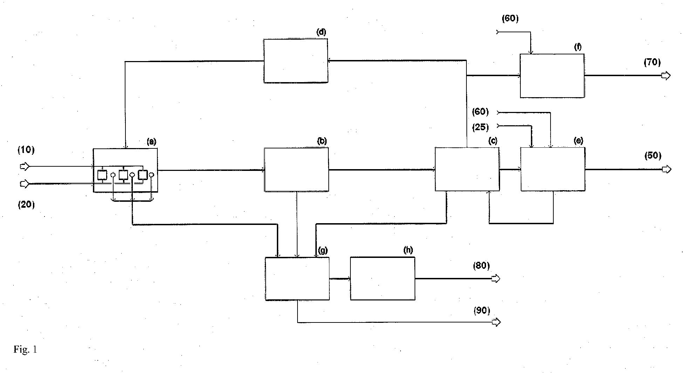

**Figur 1** zeigt schematisch eine bevorzugte Ausführungsform der hier beschriebenen Vorrichtung als Blockschaltbild.

Der Verbrennungsapparat (a) dient der Umsetzung von elementarem Schwefel 10 mit Sauerstoff 20 unter Bildung von Schwefeldioxid. Der Verbrennungsapparat ist in Verbrennungszonen aufgeteilt, die durch Mittel zur Wärmeabfuhr voneinander separiert sind. Im vorliegenden Beispiel sind es drei Verbrennungszonen. Der Verbrennungsapparat wird zudem über die Wand gekühlt.

Aus der letzen Verbrennungszone des Verbrennungsapparats (a) gelangt das Reaktionsgas umfassend Sauerstoff und Schwefeldioxid in einen Röhrenkontaktapparat (b) zur katalytischen Weiteroxidation des Schwefeldioxids zu Schwefeltrioxid.

Vorzugsweise weist der Röhrenkontaktapparat Reaktionsrohre mit Nenndurchmessern von 25 mm bis 150 mm, bevorzugt 50 mm bis 80 mm bei Rohrlängen von 1 m bis 12 m, bevorzugt 2 m bis 6 m auf. Die Zahl der Reaktionsrohre wird durch die zu erzielende Kapazität bestimmt und liegt üblicherweise im Bereich von 2 bis 50.000 Stück.

Für das Erzeugen von Schwefelsäure wird das aus der Oxidationsstufe (b) erhaltene Reaktionsgas, das hauptsächlich $SO_3$, $SO_2$ und $O_2$ enthält, dem Anlagenteil (c) zugeführt. Die Absorption von $SO_3$ erfolgt im Anlagenteil (c) vorzugsweise in hochkonzentrierter Schwefelsäure. Als flüssiges Produkt der Absorptionsstufe wird hochprozentige Schwefelsäure erhalten, aus der nach entsprechender Verdünnung, Abkühlung und Strippung in Schritt (e) die Produktsäure 50 erhalten wird.

Nicht umgesetzte Mengen an Schwefeldioxid und Sauerstoff werden über die Gasrückführung (d) zurück in die Verbrennungskammer gegeben. Dabei wird ein Teil des Gases ausgeschleust, um das Anreichern unerwünschter Nebenprodukte aus den Edukten zu verhindern. Der ausgeschleuste Teilgasstrom wird einer Abgasreinigung (f) zugeführt und verlässt schließlich als Abgas 70 die Anlage.

Die bei der Verbrennung (a), der katalytischen Oxidation (b) und der Schwefeltrioxidabsorption (c) freiwerdenden Wärmemengen werden über Zwischenkreisläufe einer Wärmerückgewinnung (g) zugeführt. Ein Teil der Wärme kann einer Energiewandlung (h) zur Gewinnung elektrischer Energie 80 zugeführt werden. Ein anderer Teil wird als Dampf und/oder Warmwasser 90 genutzt.

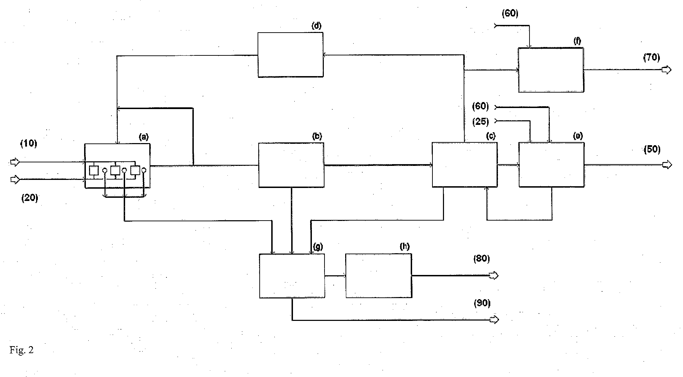

**Figur 2** zeigt eine Variante der Vorrichtung aus Figur 1, bei der ein Teil des aus der Verbrennungskammer (a) stammenden Gasgemisches direkt wieder in die Verbrennungskammer zurückgeführt wird. Dies kann für bestimmte Betriebsbedingungen zur Verbesserung der Temperaturführung sinnvoll sein.

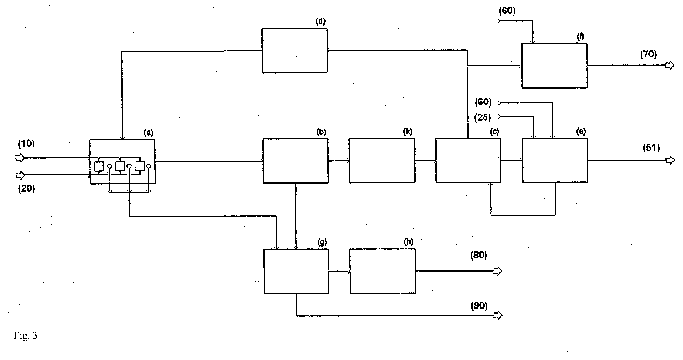

**Figur 3** zeigt eine weitere Variante der Vorrichtung aus Figur 1, bei der nach der katalytischen Oxidation eine Kondensation (k) erfolgt, mit dem Vorteil das in einem Apparat flüssiges Schwefeltrioxid erhalten wird und eine mehrstufige weitere Verarbeitung nicht erforderlich ist.

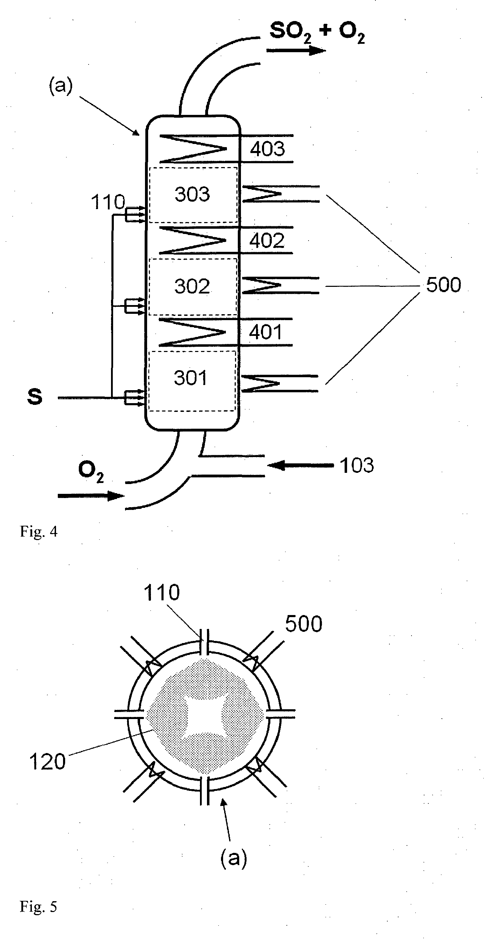

**Figur 4** zeigt schematisch eine bevorzugte Ausführungsform des Verbrennungsapparats. Über einen unteren Einlass wird das $O_2$-haltige Verbrennungsgas in den Verbrennungsapparat gefördert. Diesem Hauptgasstrom können nicht umgesetzte Bestandteile aus dem erfindungsgemäßen Verfahren beigegeben werden (Kreisgas 103). Die Zuführung von Schwefel (S) erfolgt entlang der Strömungsrichtung in drei aufeinanderfolgenden Verbrennungszonen (301, 302, 303, dargestellt durch gestrichelte Linien). Die Verbrennungszonen sind nicht-adiabat ausgeführt, was im vorliegenden Fall durch eine Wandkühlung (500) realisiert wird. Zwischen den Verbrennungszonen sind Wärmetauscher zur Kühlung angeordnet (401, 402). Im Anschluss an die letzte Verbrennungszone (303) erfolgt eine weitere Kühlung (403), bevor das Reaktionsgas den Verbrennungsapparat verlässt.

**Figur 5** zeigt einen Querschnitt durch die in Figur 4 gezeigte Verbrennungskammer in Höhe der Eindüsungsstellen (110) für die Schwefelverbindung (S). Es sind vier Düsen vorhanden, die zu einer fächerförmigen Eindüsung (120) der Schwefelverbindung führen. Die Wandkühlung (500) ist ebenfalls schematisch dargestellt.

**Figur 6** zeigt schematisch eine bevorzugte Ausführungsform einer innen mischenden Düse zur Zerstäubung von flüssigem Schwefel in die Brennkammer. Zur Zerstäubung wird im vorliegenden Beispiel Kreisgas (103a) verwendet (z. B. mit einem Überdruck von 1 bis 3 bar). Die Düse wird ferner von außen mit Kreisgas (103b) gekühlt (z.B. mit einem Überdruck von < 100 mbar).

**Figur 7** zeigt das Temperaturprofil in dem Verbrennungsappaiat in Strömungsrichtung entlang einer Linie $L$, die parallel zu einem Längsschnitt durch den Verbrennungsapparat führt. Zunächst steigt die Temperatur $T$ in der ersten Verbrennungszone 301 bis auf einen Maximalwert $T_{301}^{max}$. Dieser Maximalwert wird durch Kühlung auf einen Wert von $\leq 2000°C$ gehalten. Der Verbrennungszone 301 ist eine intensive Zwischenkühlung 401 nachgeschaltet, die zu einer Temperatursenkung führt. Die Temperatur steigt dann in der zweiten Verbrennungszone 302 auf einen Maximalwert $T_{302}^{max}$ an, der kleiner ist als $T_{301}^{max}$. Auch der Verbrennungszone 302 ist eine intensive Kühlung (402) nachgeschaltet; die Temperatur sinkt. In der dritten Verbrennungszone 303 erreicht das Reaktionsgas schließlich eine Maximaltemperatur $T_{303}^{max}$, die kleiner ist als $T_{302}^{max}$. Bevor das Reaktionsgas den Verbrennungsapparat verlässt, wird es erneut gekühlt (403).

Es sei angemerkt, dass das Temperaturprofil über den Querschnitt des Verbrennungsapparats variiert; so liegen die Temperaturen nahe der Wandungen des Verbrennungsapparates aufgrund der Wandkühlung deutlich niedriger.

Im Folgenden wird als ein Ausführungsbeispiel des erfindungsgemäßen Verfahrens das Ergebnis einer numerischen Berechnung zur Herstellung von rund 30 t/h 98,5%iger Schwefelsäure beschrieben. Das Verfahren wird in einer Anlage gemäß Fig. 1 durchgeführt.

Als Edukte werden 10 t/h Schwefel und 15,2 t/h Sauerstoff mit einem Volumenanteil von 99,5% Sauerstoff und 0,5% Stickstoff einem Verbrennungsapparat mit drei Verbrennungszonen zugeführt, wobei für das Beispiel der Massenstrom Sauerstoff am Eintritt des Verbrennungsapparates, und der Massenstrom Schwefel im Verhältnis 5,7:3,8:0,5 der ersten, zweiten und dritten Zone zugeführt wird.

Zusätzlich werden dem Verbrennungsgas 12,9 t/h rückgeführtes Gas zugeführt, das aus 46 Gew.-% $O_2$, 15 Gew.-% $N_2$, 37 Gew.-% $SO_2$ sowie Anteilen von Ar, $CO_2$ und $SO_3$ und zusätzlich sonstigen Bestandteilen besteht.

Am Ausgang des Verbrennungsapparats werden 38,1 t/h $SO_2$-haltigen Gasgemisches erhalten, das zu 64,9 Gew.-% $SO_2$, 29,2 Gew.-% $O_2$, 5,3 Gew.-% $N_2$ und zusätzlich sonstigen Bestandteilen besteht.

Das erhaltene $SO_2$-haltige Gasgemisch wird auf 430°C abgekühlt und dem Röhrenkontaktapparat zugeführt.

Im Röhrenkontaktapparat wird das im Gasstrom enthaltene $SO_2$ zu 80% umgesetzt, so dass am Ausgang des Röhrenkontaktapparates ein Gasgemisch bestehend aus 64,93 Gew.-% $SO_3$, 12,98 Gew.-% $SO_2$, 16,19 Gew.-% $O_2$ und zusätzlich sonstigen Bestandteilen mit einer Temperatur von 500°C vorliegt.

Nach Durchlaufen eines Economizers wird das Gasgemisch mit einer Temperatur von 199°C einem Venturiwäscher zugeführt. Im dem Venturiwäscher wird der Hauptanteil des $SO_3$-Gases absorbiert. Die restliche $SO_3$-Absorption erfolgt in einer nachgeschalteten Absorptionskolonne Das Sumpfprodukt des Venturiwäschers wird über einen Wärmeübertrager geführt und mit dem Sumpfprodukt der Absorptionskolonne zusammengeführt. Der Sumpf der Absorptionskolonne ist gleichzeitig die Pumpvorlage für die Berieselung der Kolonne und die Abgabe der Produktionssäure Nachdem der gesamte Flüssigkeitsstrom in einem Wärmeübertrager auf 90°C abgekühlt ist, werden 30,75 t/h mit einem Massenanteil von 98,5 Gew.-% $H_2SO_4$ ausgespeist und als Produkt erhalten.

Die nicht absorbierten Bestandteile der Gasphase werden im Kreislauf über ein Gebläse zum Verbrennungsapparat zurückgeführt und vor der Einspeisung mit 15,2 t/h Sauerstoff angereichert.

Aus der zur Energierückgewinnung eingesetzten Abwärme werden in einer Kondensationsturbine rd. 10,5 MW für das Erzeugen von el. Energie zurückgewonnen. Zusätzlich entstehen nach Abzug der im Prozess benötigten Energien 8,5 t/h 6bar-Dampf zur Abgabe.

Bezugszeichen

(a)     Verbrennungsapparat
(b)     Röhrenkontaktapparat zur katalytischen Oxidation von Schwefeldioxid
(c)     Mittel zur Absorption von Schwefeltrioxid
(d)     Mittel zur Gasrückführung
(e)     Mittel zur Konditionierung (Verdünnen, Strippen)
(f)     Mittel zur Abgasreinigung
(g)     Mittel zur Wärmerückgewinnung
(h)     Mittel zur Energiewandlung
(j)     Mittel zur Gastrocknung
(k)     Mittel zur Kondensation von Schwefeltrioxid

10     Zufuhr von Schwefel
20     Zufuhr von Sauerstoff
25     Zufuhr von Sauerstoff
50     Schwefelsäureprodukt
51     Oleum
55     Schwefelsäure zur Trocknung
60     Zufuhr von Wasser
70     Abgas
80     elektrische Energie
90     Dampf, Warmwasser
103     zurückgeführtes Gas aus dem Prozess (Kreisgas)
110     Eindüsungsstellen für Schwefel
120     eingedüster Schwefel
301     Verbrennungszone
302     Verbrennungszone
303     Verbrennungszone
401     Zwischenkühlung
402     Zwischenkühlung
403     Wärmeübertrager (Überhitzer)
500     Wandkühlung

**Patentansprüche**

1. Kontinuierliches Verfahren zur Herstellung von Schwefelsäure, umfassend die Schritte:

    (a) Umsetzen von elementarem Schwefel und/oder Schwefelverbindungen mit einem sauerstoffhaltigen Verbrennungsgas in einem Verbrennungsapparat unter Bildung von Schwefeldioxid,

(b) katalytische Oxidation des Schwefeldioxids aus Schritt (a) unter Bildung von Schwefeltrioxid,

(c) Absorption und/oder Kondensation des Schwefeltrioxids aus Schritt (b) in Schwefelsäure,

wobei in Schritt (a) das Verbrennungsgas durch den Verbrennungsapparat geleitet wird, der mindestens zwei in Strömungsrichtung des Verbrennungsgases aufeinander folgende Verbrennungszonen aufweist, wobei in jeder Verbrennungszone elementarer Schwefel und/oder Schwefelverbindungen in das Verbrennungsgas eingedüst wird, wobei jede Verbrennungszone gekühlt wird und wobei jeder Verbrennungszone ein Wärmeübertrager nachgeschaltet ist, mit dem das Reaktionsgas gekühlt wird, so dass die Maximaltemperatur in jeder Verbrennungszone einen Wert von 2000°C nicht übersteigt, **dadurch gekennzeichnet, dass** die Maximaltemperaturen in den Verbrennungszonen in Richtung des Hauptgasstroms abnehmen.

2. Verfahren nach Anspruch 1, **dadurch gekennzeichnet, dass** ein Teil des nach der Absorption und/oder Kondensation des Schwefeltrioxids in Schritt (c) resultierenden Gasstroms, der nicht umgesetzte Mengen an Schwefeldioxid und Sauerstoff enthält, in den Verbrennungsapparat zurückgeführt wird.

3. Verfahren nach Anspruch 1 oder 2, **dadurch gekennzeichnet, dass** das den Verbrennungsapparat verlassende Gasgemisch Sauerstoff und Schwefeldioxid im Volumenverhältnis von 0,5 bis 1,5 enthält.

4. Verfahren nach einem der Ansprüche 1 bis 3, **dadurch gekennzeichnet, dass** das aus Schritt (a) resultierende Gasgemisch nach Abkühlung auf eine Temperatur im Bereich von 380 bis 450°C ohne Zusatz weiterer Gase einer Kontaktstufe zugeführt wird, in der Schritt (b) ausgeführt wird.

5. Verfahren nach einem der Ansprüche 1 bis 4, **dadurch gekennzeichnet, dass** Schritt (b) in einer einzigen Kontaktstufe ausgeführt wird und das die Kontaktstufe verlassende Gasgemisch eine Zusammensetzung mit einem Massenverhältnis von $SO_2:SO_3$ im Bereich von 1:50 bis 1:2 aufweist.

6. Verfahren nach einem der Ansprüche 1 bis 5, **dadurch gekennzeichnet, dass** Schritt (b) in einem Röhrenkontaktapparat ausgeführt wird.

7. Verfahren nach einem der Ansprüche 1 bis 6, **dadurch gekennzeichnet, dass** die an unterschiedlichen Positionen des Verfahrens freiwerdende Wärme für das Erzeugen von Dampf, Warmwasser oder elektrischer Energie eingesetzt wird.

8. Verfahren nach einem der Ansprüche 1 bis 7, **dadurch gekennzeichnet, dass** kein Schwefeltrioxid in den Verbrennungsapparat zurückgeführt wird.

9. Verfahren nach einem der Ansprüche 1 bis 8, **dadurch gekennzeichnet, dass** ein schwefeldioxidhaltiges Gas lediglich zur Verdüsung von Schwefel und/oder zur Kühlung der Schwefeldüsen zurückgeführt wird.

**Claims**

1. A continuous process for producing sulfuric acid, comprising the steps:

(a) reacting elemental sulfur and/or sulfur compounds with an oxygen-containing combustion gas in a combustion unit to form sulfur dioxide,
(b) catalytically oxidizing the sulfur dioxide from step (a) to form sulfur trioxide,
(c) absorbing and/or condensing the sulfur trioxide from step (b) in sulfuric acid,

wherein in step (a) the combustion gas is led through the combustion unit, which has at least two successive combustion zones in the direction of flow of the combustion gas, wherein in each combustion zone elemental sulfur and/or sulfur compounds is/are injected into the combustion gas, each combustion zone is cooled, and downstream from each combustion zone a heat exchanger is provided with which the reaction gas is cooled, so that the maximum temperature in each combustion zone does not exceed a value of 2000°C, **characterized in that** the maximum temperatures in the combustion zones decrease in the direction of the main gas stream.

2. The process according to Claim 1, **characterized in that** a portion of the gas stream which results after the absorption and/or condensation of the sulfur trioxide in step (c) and which contains quantities of unreacted sulfur dioxide and oxygen is recirculated to the combustion unit.

3. The process according to Claim 1 or 2, **characterized in that** the gas mixture leaving the combustion unit contains oxygen and sulfur dioxide in a volume ratio of 0.5 to 1.5.

4. The process according to one of Claims 1 to 3, **characterized in that** the gas mixture resulting from step (a), after cooling to a temperature in the range of 380 to 450°C, is supplied, without adding further gases, to a contact stage in which step (b) is carried out.

5. The process according to one of Claims 1 to 4, **characterized in that** step (b) is carried out in a single contact stage, and the gas mixture leaving the contact stage has a composition with a mass ratio of $SO_2:SO_3$ in the range of 1:50 to 1:2.

6. The process according to one of Claims 1 to 5, **characterized in that** step (b) is carried out in a tube contact apparatus.

7. The process according to one of Claims 1 to 6, **characterized in that** the heat that is released at different locations in the process is used for generating steam, hot water, or electrical energy.

8. The process according to one of Claims 1 to 7, **characterized in that** no sulfur trioxide is recirculated to the combustion unit.

9. The process according to one of Claims 1 to 8, **characterized in that** a sulfur dioxide-containing gas is recirculated solely for atomizing sulfur and/or for cooling the sulfur nozzles.

## Revendications

1. Procédé continu de production d'acide sulfurique, comprenant les étapes suivantes :

(a) mise en réaction de soufre élémentaire et/ou de composés soufrés avec un gaz de combustion contenant de l'oxygène dans un appareil de combustion avec formation de dioxyde de soufre,
(b) oxydation catalytique du dioxyde de soufre provenant de l'étape (a) avec formation de trioxyde de soufre,
(c) absorption et/ou condensation du trioxyde de soufre provenant de l'étape (b) en acide sulfurique,

dans lequel, à l'étape (a), le gaz de combustion est conduit à travers l'appareil de combustion qui présente au moins deux zones de combustion successives dans la direction d'écoulement du gaz de combustion, du soufre élémentaire et/ou des composés soufrés étant injectés dans le gaz de combustion dans chaque zone de combustion, chaque zone de combustion étant refroidie et un échangeur de chaleur étant disposé en aval de chaque zone de combustion, avec lequel le gaz de réaction est refroidi, de sorte que la température maximale dans chaque zone de combustion ne dépasse pas une valeur de 2 000 °C, **caractérisé en ce que** les températures maximales dans les zones de combustion diminuent dans la direction du flux de gaz principal.

2. Procédé selon la revendication 1, **caractérisé en ce qu'**une partie du flux de gaz résultant après l'absorption et/ou la condensation du trioxyde de soufre à l'étape (c), qui contient des quantités de dioxyde de soufre et d'oxygène n'ayant pas réagi, est ramenée dans l'appareil de combustion.

3. Procédé selon la revendication 1 ou 2, **caractérisé en ce que** le mélange gazeux qui quitte l'appareil de combustion contient de l'oxygène et du dioxyde de soufre dans un rapport des volumes de 0,5 à 1,5.

4. Procédé selon l'une des revendications 1 à 3, **caractérisé en ce que** le mélange gazeux résultant de l'étape (a), après refroidissement à une température dans la plage de 380 à 450 °C, est amené sans ajout d'autres gaz à un étage de mise en contact dans lequel l'étape (b) est exécutée.

5. Procédé selon l'une des revendications 1 à 4, **caractérisé en ce que** l'étape (b) est exécutée dans un étage de mise en contact unique et que le mélange gazeux qui quitte l'étage de mise en contact présente une composition avec un rapport des masses de $SO_2:SO_3$ dans la plage de 1:50 à 1:2.

6. Procédé selon l'une des revendications 1 à 5, **caractérisé en ce que** l'étape (b) est exécutée dans un appareil de mise en contact à tube.

7. Procédé selon l'une des revendications 1 à 6, **caractérisé en ce que** la chaleur libérée à différentes positions du procédé est utilisée pour produire de la vapeur, de l'eau chaude ou de l'énergie électrique.

8. Procédé selon l'une des revendications 1 à 7, **caractérisé en ce qu'**aucun trioxyde de soufre n'est ramené dans l'appareil de combustion.

9. Procédé selon l'une des revendications 1 à 8, **caractérisé en ce qu'**un gaz contenant du dioxyde de soufre est ramené seulement pour injecter du soufre et/ou pour refroidir les injecteurs de soufre.

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0762990 B1
- WO 2007090671 A2
- DE 1948754 A1
- WO 199532149 A1
- EP 1295849 B1
- DE 1181181 B1
- DE 10249782 A1
- WO 2008052649 A1
- DE 10351808 A1
- US 3803297 A
- US 3803298 A
- DE 1032722 B

**In der Beschreibung aufgeführte Nicht-Patentliteratur**

- Sulfuric Acid and Sulfur Trioxide. **H. MÜLLER.** Ullmanns Encycl. of Industrial Chemistry. VCH, 2005
- Ullmann's Encyclopedia of Industrial Chemistry. 1994, vol. A25, 574 f